# EUROPEAN PATENT APPLICATION

(11) **EP 0 779 171 A1**
(43) Date of publication of application: **18.06.1997**
(21) Application number: 96119823.1
(22) Date of filing: 10.12.1996
(51) Int. Cl.: B60J 5/04, B62D 25/04

(54) **Vehicle door impact absorption apparatus**

(30) Priority: 12.12.1995 KR 9548689
(71) Applicant: Hyundai Motor Company, Seoul (KR)
(72) Inventor: Cho, Kuk-Hyun, Ansan-city, Kyungki-do (KR)
(74) Representative: TER MEER STEINMEISTER & PARTNER GbR

(57) **Abstract**

The present invention relates to a vehicle door impact absorption apparatus by which side impacts can be restricted during side impact intrusions to thereby provide increased protection for the vehicle occupants, the apparatus comprising two hollow supporting bars (7,7') for inherently being disposed with a coil spring (6) at an interior of a center pillar (5) and for being resiliently inserted to thereby be fixed by a stopper (16,16') protruded outside of a center pillar outer panel (8) in order to reinforce a bracket (3b,3c) facing the center pillar (5) out of brackets which couple both tip ends of a door impact beam (4,4') lengthwise disposed within front/rear doors (1,1') to left/right tip end portions of an inner panel (2).

## Description

### BACKGROUND OF THE INVENTION

### FIELD OF THE INVENTION

The present invention relates to a vehicle door impact absorption apparatus.

### DESCRIPTION OF THE PRIOR ART

Generally, most motor vehicle doors include an outer door panel and an inner door panel in spaced relation such that a door cavity is defined therebetween where a door impact beam is disposed therebetween.

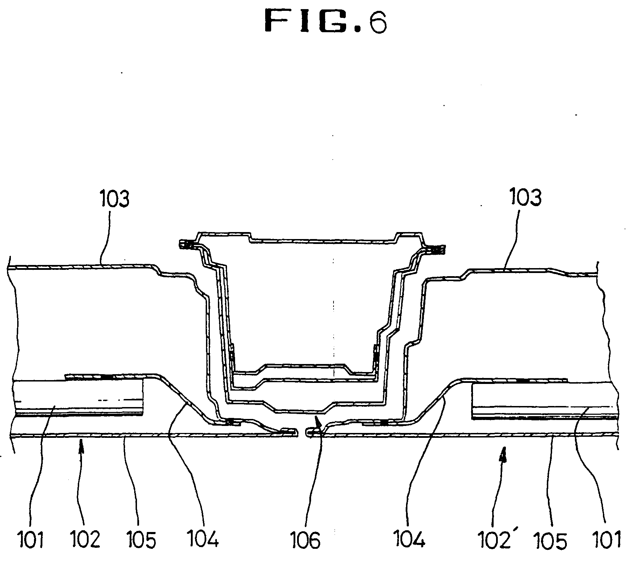

The door impact beam 101 according to the prior art has both ends thereof welded to the inner door panels 103 of front/rear doors 102 and 102' through the medium of a bracket 104, as illustrated in Figure 6.

The door impact beam 101 is an reinforced member for structurally reinforcing the front/rear doors 102 and 102' to provide increased protection for the occupants when subjected to side impact intrusion.

Although the door impact beam 101 is generally made of a pipe of high tension, the bracket 104 supporting the door impact beam 101 usually has less structural strength than that of the door impact beam 101 because of interference from the inner door panel 103 when disposed within the front / rear doors 102 and 102'.

Accordingly, there is a problem in that when the door impact beam 101 absorbs the impact during to the side impact collision, the bracket 104 is deformed before the inner door panel 103 and at the same time, both lateral surfaces of the doors 102 and 102' graze a center pillar 106 to thereafter be bent, such that an impact intrusion cannot be effectively prevented to thereby raise a safety matter.

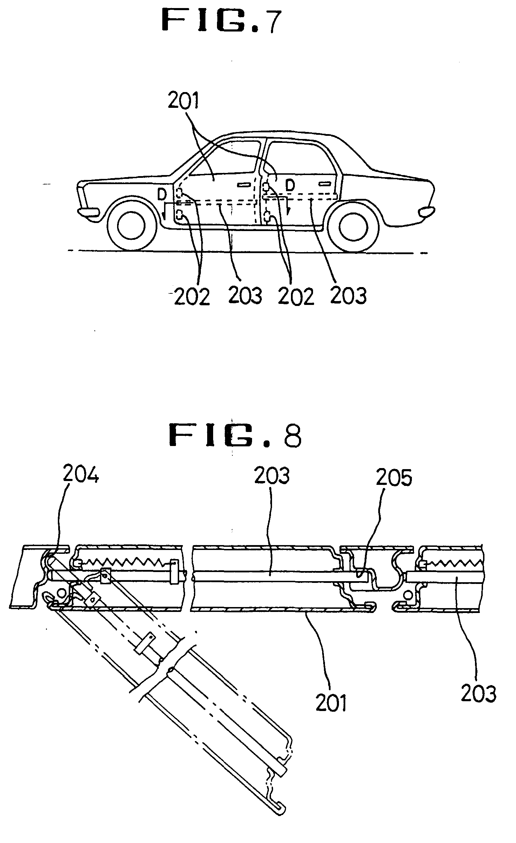

Similar impact or intrusion resistant device is known in the art as evidenced by Japanese utility model application No. Sho 50-7613, which is illustrated in Figure 7 and Figure 8.

The Japanese art is so disclosed as a reinforced door mechanism at a vehicle that a door body 201 is employed by a bar 203 which can be inserted into a door body 201 horizontally and which can provide elastic force toward a hinge 202 thereof.

The pillar is disposed at a lateral surface thereof toward the hinge with a concave guide surface 204 for so guiding the other end of the bar 20 to be inserted thereinto and protruded when fitted to a sectional surface of the hinge at the bar 203 to thereby open and close the door.

A latching unit 205 facingly disposed near the other end of the bar 203 protruded in time for door close is provided at a pillar located far from the hinge 202.

However, there is a problem in the vehicle door equipped with the reinforced mechanism thus described, in that safety protection for the vehicle occupants cannot be provided in that the impact applied to the door during side impact collisions can hardly be distributed to the center pillar and absorbed thereby.

### SUMMARY OF THE INVENTION

Accordingly, the present invention is presented to solve the aforementioned problem and it is a object of the present invention to provide a vehicle door impact absorption apparatus by which a deformation of a bracket supporting both tip ends of a door impact beam by selectively being protruded into a door cavity during the side impact collision can be resisted and the impact can be distributed to the center pillar to thereby provide a safety protection to the vehicle occupants from a side impact intrusion.

In accordance with the object of the present invention, there is provided a vehicle door impact absorption apparatus, the apparatus comprising two hollow supporting bars for inherently being disposed with a coil spring at a interior of a center piller and for being resiliently inserted to thereby be fixed by stoppers protruded outside of a center pillar outer panel in order to reinforce a bracket facing a center pillar out of brackets which couple both tip ends of a door impact beam lengthwise disposed within front/ rear doors to left/right tip end portions of an inner panel.

### BRIEF DESCRIPTION OF THE DRAWINGS

For fuller understanding of the nature and objects of the invention, reference should be made to the following detailed description taken in conjunction with the accompanying drawings in which:
Figure 1 is a side view of a vehicle ;
Figure 2 is a sectional view of a impact absorption apparatus according to the present invention disposed in a center pillar taken along a line A-A in Figure 1;
Figure 3 is a sectional view for illustrating an operational state of a supporting bar according to an embodiment of the present invention;
Figure 4 is a sectional view taken along a line B-B in Figure 3;
Figure 5 is a sectional view taken along a line C-C in Figure 3;
Figure 6 is a sectional view for illustrating a center pillar of a body of a vehicle according to the prior art which corresponds to a section taken along a line A-A in Figure 1;
Figure 7 is a side view of a vehicle mounted with a door impact beam according to the prior art; and
Figure 8 is a sectional view taken along a line D-D in Figure 7.

### DETAILED DESCRIPTION OF THE INVENTION

Now, the preferred embodiment of the present invention will be described with reference to the accompanying drawings.

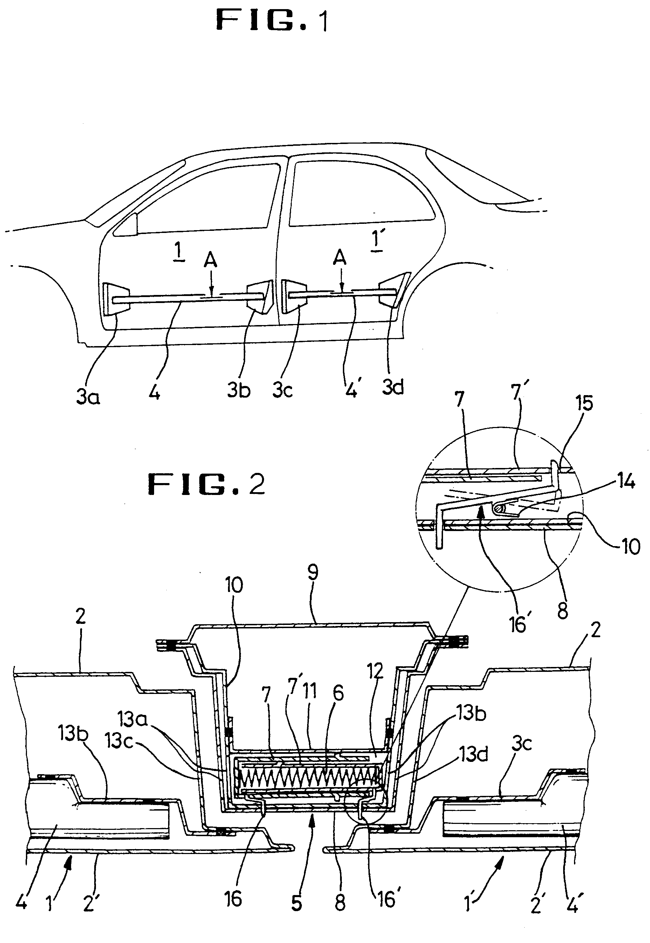

As illustrated in Figures 1 through 5, the vehicle door impact absorption apparatus according to the present invention is a structural reinforcement of door impact beams 4 and 4' for being lengthwise disposed within doors 1 and 1' mounted at front/rear areas of left/right sides of the body to thereby be crossed at both tip ends thereof and for being fixed at crossed portions thereof through the media of flat-bodied brackets 3a,3b, 3c and 3d welded to left/right tip ends of the inner panel 2.

In other words, the present invention serves to reinforce a structural strength of the tip end portions of the door impact beams 4 and 4' toward a center pillar 5 respectively disposed within the front / rear doors 1 and 1'

In order to achieve the object of the present invention, the door impact absorption apparatus comprises two hollow supporting bars 7 and 7' for being resiliently and insertedly fitted into the center pillar 5 with coil spring 6 positioned therein.

The supporting bars 7 and 7' are inherently disposed in a supporting bar accommodation space unit 12 formed thereby with a reinforcing member 10 and a bracket 11 integrally coupled in order to form a closed space between a center pillar outer panel 8 and a center pillar inner panel 9.

In other words, the supporting bar accommodation space unit 12 includes the reinforcing member 10 integrally engaged to two tip end portions of the center pillar outer panel 8 and the center pillar inner panel 9, and the closed space formed by the bracket 11 engaged to the reinforcing member 10.

Furthermore, the reinforcing member 10 and the center pillar outer panel 8 which are two portions of the supporting bar accommodation space unit 12 are respectively formed with holes 13a and 13b, against which, holes 13c and 13d are respectively formed at left / right portions of the inner panel 2 at the front/ rear doors 1 and 1'.

The supporting bars 7 and 7' are hinged to an inner wall of the center pillar outer penal 8 along with a torsion spring 14, and one end of which simultaneously penetrates the center pillar outer panel 8 and the reinforeing member 10 to thereafter be protruded externally while the other end of which is securely fixed through the media of stoppers 16 and 16' supported to a hole 15 piercing through the supporting bars 7 and 7'

Likewise, when the outer panel 2' of the front/ rear doors 1 and 1' is pushed into the door, being deformed, a tip end of the stoppers 16 and 16' hinged to an inner wall of the center pillar outer panel 8 along with the torsion spring 14 by the outer panel 2' is pressurized and rotated, by which , the other end of the stoppers 16 and 16' is displaced from the hole 15 formed through the supporting bars 7 and 7'.

At this time, the supporting bars 7 and 7' restricted in horizontal expansion thereof by the stoppers 16 and 16' are burst open horizontally by restoring force of inherently-disposed coil spring 6 to thereafter enter the cavity of the doors 1 and 1' through the holes 13a and 13b respectively formed at the outer panel 2' and the holes 13c and 13d formed at the inner panel 2 at the front /rear doors 1 and 1'.

When the supporting bars 7 and 7' are extended toward the brackets 3b and 3c which fix the door impact beams 4 and 4' to the inner panel 2', the supporting bars 7 and 7' serve to reinforce structural strength of the brackets 3b and 3c for securing one end of the center pillar at door impact beams 4 and 4'.

Meanwhile, the supporting bars 7 and 7' are respectively formed at a peripheral surface thereof with protruders 17 and 17' and the supporting bar accommodation space unit 12 is burst open horizontally by a restoring force of the coil spring 6 caused by rotation of the stoppers 16 and 16' according to the impact, and when the protruders 17 and 17' make inroads into the doors 1 and 1' through the holes 13a and 13b at the outer panel 2' and the holes 13c and 13d at the rear doors 1 and 1', an insertion distance is defined, which is meant to prevent the supporting hbars 7 and 7' from breaking away into an external area of the supporting bar accommodation space unit 12 and to allow same to exercise proper functions thereof.

Furthermore, two tip ends of the door impact beams 4 and 4' and tip ends of the brackets 3b and 3c engaged thereto are concavely formed in order to accommodate same when the supporting bars 7 and 7' are protruded, as illustrated in Figure 4, and more particularly, the brackets 3b and 3c directly contacting the supporting bars 7 and 7' are concavely formed with a concave unit 18 so as to encompass an external appearance thereof.

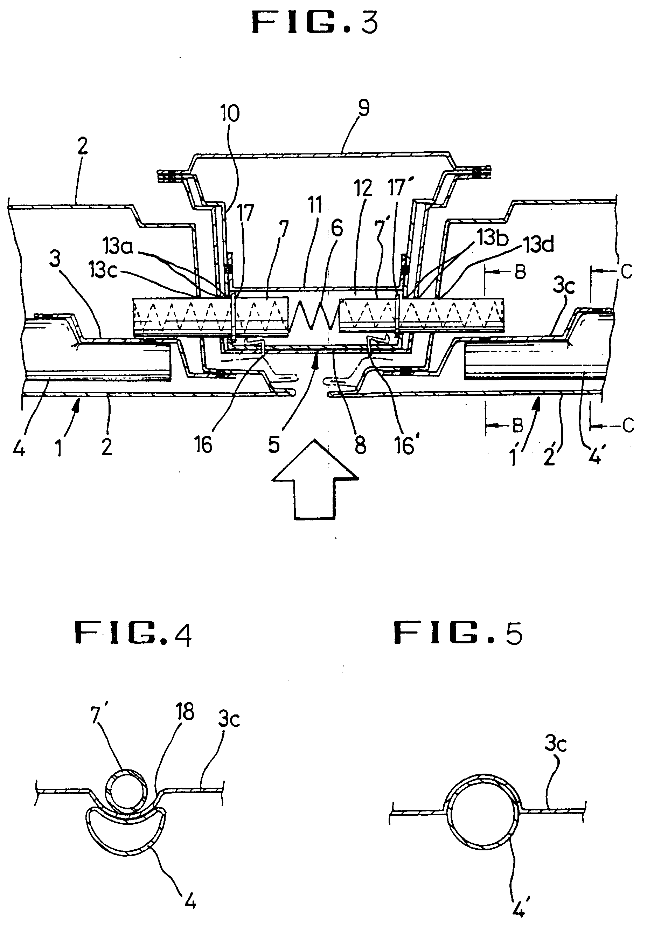

The door impact beams 4 and 4' not directly in touch with the supporting bars 7 and 7' and the brackets 3a,3b,3c and 3d engaged to two tip ends thereof, as illustrated in Figure 5, are respectively formed in semi-circular arch shapes in order to enlarge a contact area and thereby to improve a junction force therebetween when engaged with the door impact beams 4 and 4'.

Now, an operational effect of the door impact absorption apparatus according to the embodiment of the present invention will be described.

When an impact is applied to the doors 1 and 1' during side impact collisions, the door impact beams 4 and 4' absorb the impact thereon and at the same time, lateral surfaces of the doors 1 and 1' (portions toward the center pillar ) apply the impact to the stoppers 16 and 16', by which the torsion spring 14 is compressed to cause the stoppers 16 and 16' to be rotated.

The stoppers 16 and 16' are slipped at one end thereof out of the hole 15 formed at the supporting bars 7 and 7' to cause the coil spring 6 inherently disposed between the supporting bars 7 and 7' to exercise an elastic force and again to cause the supporting bars to be protruded externally through the holes 13a, 13b, 13c and 13d formed at the center pillar outer panel 8, reinforcing member 10 and at the inner panel 2.

By this, the other end of the supporting bars 7 and 7' which have entered interiors of the front/rear doors 1 and 1' prevents the brackets 3b and 3c supporting the tip end of the impact beams 4 and 4' from being deformed.

Accordingly, as described in the aforesaid descriptions, the supporting bars 7 and 7' can sustain the impact applied thereto during side impact collisions.

Furthermore, the brackets 3b and 3c which are refrained from being deformed through the media of the supporting bars 7 and 7' can effectively distribute the impact applied to the body of the vehicle resultant from side inpact collision to the center pillar 5 to thereby provide the passengers the safety.

As apparent from the foregoing, there is an advantage in the vehicle door impact absorption apparatus, in that supporting bars fabctuibubg as door impact absorption apparatus are disposed at a center pillar to cause same bars to be protruded during side impact collisions of a door and to thereby support a tip end of door impact beams in a door cavity, so that brackets supporting two tip ends of the door impact beams are saved from being deformed, and, at the same time, the impact can be distributed to a center pillar to effectively absorb the side impact during the side impact collisions of a vehicle.

There is another advantage in that a sufficient absorption of the impact during side impact collisions can restrict an intrusion into the door to thereby provide increased protection for the vehicle occupants during the side impact collisions.

## Claims

1. A vehicle door impact absorption apparatus, the apparatus comprising two hollow supporting bars for inherently being disposed with a coil spring at an interior of a center pillar and for being resiliently inserted to thereby be fixed by a stopper protruded outside of a center pillar outer panel in order to reinforce a bracket facing a center pillar out of brackets which couple both tip ends of a door impact beam lengthwise disposed within front/rear doors to left/right tip end portions of an inner panel.

2. The apparatus as defined in claim 1, wherein the supporting bars are inherently disposed in a supporting bar accommodation space unit where a reinforcing member and brackets are formed so as to form a closed space between the center pillar outer panel and the center pillar inner panel.

3. A vehicle door impact absorption apparatus as defined in claim 1, wherein the supporting bars are hinged to an inner wall of the center pillar outer panel along with a torsion spring whereby one end thereof is protruded outside of the center pillar inner panel and the other end thereof is fixedly secured by stoppers supported in a hole piercing through the supporting bars.

4. A vehicle door impact absorption apparatus as defined in claim 3, wherein the supporting bars are respectively formed at a periphery thereof with protruders so as to define an insertion distance when same enter a cavity of the door through holes of an outer panel and holes of front/rear doors.

5. A vehicle door impact absorption apparatus as defined in claim 2, wherein the reinforcing member and the center pillar outer panel which are two lateral portions of the supporting bar accommodation space unit are respectively formed with holes, against which, holes are also respectively formed at left/right portions of the inner panel at front /rear doors.

6. A vehicle door impact absorption apparatus as defined in claim 1, wherein the door impact beam is shaped at a tip end thereof with a semi-circular arch form and a bracket facing thereto is formed with a concaived unit.
